# EUROPEAN PATENT APPLICATION

(11) **EP 4 826 562 A1**
(43) Date of publication of application: **21.10.2026**
(21) Application number: 26171287.1
(22) Date of filing: 08.04.2026
(51) Int. Cl.: G06F 16/2453, G06F 16/245

(54) **ACCELERATING DATABASE QUERIES USING A COPROCESSOR**

(30) Priority: 14.04.2025 US 202519178107
(71) Applicant: Microsoft Technology Licensing, LLC, Redmond, WA 98052 (US)
(72) Inventor: INTERLANDI, Matteo, Redmond, Washington, 98052 (US); BRUNO, Nicolas, Redmond, Washington, 98052 (US); PEEPER, Craig Carroll, Redmond, Washington, 98052 (US); AL-GHOSIEN, Momin Mahmoud, Redmond, Washington, 98052 (US); DUMITRU, Marius, Redmond, Washington, 98052 (US)
(74) Representative: CMS Cameron McKenna Nabarro Olswang LLP

(57) **Abstract**

Methods, apparatuses, and products for database query acceleration. Methods include receiving, by a query execution platform, database query plan data from a database host, the database query plan data comprising a query execution plan and one or more database tables, translating the database query plan data into format associated with a coprocessor of the query execution platform, generating a coprocessor query execution plan for the coprocessor based on the query execution plan of the database query plan data, identifying one or more operators for executing the coprocessor query execution plan, selecting an implementation for each of the one or more operators based on one or more characteristics of data on which the one or more operators are to be applied based on the coprocessor execution plan, and executing the coprocessor query execution plan using the coprocessor.

## Description

### BACKGROUND

A database is an electronically stored, structured collection of data that a Database Management System (DBMS) organizes and manages. The database organizes data into tables with rows and columns. Users interact with it through queries tailored to the specific database engine, enabling retrieval, updates, and deletions. Databases are essential for efficiently managing and retrieving data in various applications, from small projects to large enterprise systems. In distributed databases, such as those hosted in a cloud computing system, the system stores data across multiple physical locations, such as different servers or geographical areas. The distributed nature of such a database setup helps improve data availability, reliability, and performance by distributing the workload and ensuring that data is closer to the users who need it.

Query processing in a database involves parsing the query, generating and optimizing an execution plan to select the most efficient data access methods, and generating a detailed physical execution plan. A system then executes the plan, performing operations on data tables (e.g., table scans and joins), before returning the result set to the user. Query processing in distributed databases involves breaking down a high-level query into smaller sub-queries, determining the locations of the required data fragments, and optimizing the execution plan to minimize data transfer and balance the workload. Each sub-query is executed locally on a respective node, and the results are sent back to a central coordinating node, which assembles the final result. This process provides efficient data retrieval and manipulation across multiple locations by optimizing resource usage and communication costs.

Graphics Processing Units (GPUs) accelerate database queries, particularly for workloads that benefit from parallel processing. GPUs excel at parallel processing, which allows them to handle large-scale data operations and complex queries more efficiently than traditional CPUs. This makes them particularly well-suited for data-intensive tasks such as analytics and real-time data processing. GPUs enhance database performance by utilizing their massive parallelism and high memory bandwidth, significantly reducing query execution times and improving real-time analytics. This is especially beneficial for applications that require processing large volumes of data quickly.

The use of GPUs for processing database queries, however, is limited in conventional systems. In particular, because there are many different types of databases and database engines, current implementation of GPUs in query processing is piecemeal and generally only applicable to a single database type. Additionally, coordinating GPUs for diverse data types, multiple sources, and large datasets exceeding GPU memory remains a challenge for efficient database query acceleration. Accordingly, several enhancements are necessary to capture the efficiencies provided by GPUs with respect to processing database queries.

### SUMMARY

According to one or more embodiments of the present disclosure, various methods, apparatus, and products for accelerating database queries are disclosed, potentially including: receiving, by a query execution platform, database query plan data from a database host, the database query plan data comprising a query execution plan and one or more database tables; translating the database query plan data into format associated with a coprocessor of the query execution platform; generating a coprocessor query execution plan for the coprocessor based on the query execution plan of the database query plan data; identifying one or more operators for executing the coprocessor query execution plan; selecting an implementation for each of the one or more operators based on one or more characteristics of data on which the one or more operators are to be applied based on the coprocessor execution plan; and executing the coprocessor query execution plan using the coprocessor.

### BRIEF DESCRIPTION OF DRAWINGS

Fig. 1 sets forth a diagram of an example system architecture for database query execution using a coprocessor in accordance with one or more embodiments.
Fig. 2 sets forth a diagram illustrating an example system for database query execution using a coprocessor in accordance with one or more embodiments.
Fig. 3 sets forth a diagram illustrating an example process flow for database query execution using a coprocessor in accordance with one or more embodiments.
Fig. 4 illustrates an example database table translation into tensors for offloading query execution, in accordance with one or more embodiments.
Fig. 5A sets forth a diagram illustrating an example process flow for preparing and storing hash tables in a coprocessor cache for executing a database query using a coprocessor in accordance with one or more embodiments.
Fig. 5B sets forth a diagram illustrating an example process flow for using hash tables in a coprocessor cache for executing a database query using a coprocessor in accordance with one or more embodiments.
Fig. 6A illustrates an example query execution plan including selected operators and operator implementations, in accordance with one or more embodiments.
Fig. 6B illustrates an example set of operators and operator implementations registered for a coprocessor, in accordance with one or more embodiments.
Fig. 7 sets forth a flow chart illustrating an example method of database query execution acceleration using a coprocessor in accordance with one or more embodiments.
Fig. 8 sets forth a flow chart illustrating another example method of database query execution acceleration using a coprocessor in accordance with one or more embodiments.
Fig. 9 sets forth a flow chart illustrating another example method of database query execution acceleration using a coprocessor in accordance with one or more embodiments.
Fig. 10 illustrates an exemplary computing device that may be specifically configured to perform one or more of the processes described in the present disclosure.
Fig. 11 sets forth a block diagram of a cloud service provider service architecture in accordance with one or more embodiments.

### DESCRIPTION OF EMBODIMENTS

Contemporary database systems, which can store large amounts of data, execute various operations to allow for retrieval and management of the data stored within such databases. Current database systems can be local to a certain device or storage system or can be distributed across several storage systems. Additionally, database operations may be executed by processing devices that are either local to the data storage or remotely located. Database management systems (DBMS), also referred to as a database server or database host server, manage database operations to store, manage, and retrieve data of a database. Generally, a DBMS includes a database engine responsible for performing essential operations such as creating, reading, updating, and deleting data within the database. Various types of database engines exist for managing different types of databases, including relational databases, NoSQL databases, and in-memory databases. Conventionally, the database engine for each of the various database types may be designed to handle different data structures and different use cases corresponding to the type of database being managed.

As discussed above, in some cases a DBMS and the processing resources used to perform and execute database query operations can operate remotely, separate from the data stored within the database. In such setups, the DBMS server manages the database operations while the actual data storage can be located on a different server or in a different location. This is common in distributed computing environments, such as cloud computing, where users at a DBMS client (e.g., a client device) send queries to a remote DBMS server which then initiates performance of the query. Whether the database is local or distributed, large amounts of data may have to be processed in response to a database query. Executing queries on large datasets may slow down performance and introduce significant latencies in database-driven applications. To reduce data query processing time, and thus latency for database query responses, certain operations that are typically handled by a central processing unit (CPU) can be offloaded to one or more coprocessors, such as a graphics processing unit (GPU), field programmable gate array (FPGA), or other hardware accelerator. In particular, because GPUs can perform large numbers of parallel operations on structured data, they can accelerate the execution of queries by executing portions of operations from a query plan in parallel. Accordingly, a CPU can offload and orchestrate these portions of the query plan to obtain a result for the query.

Current systems for using a GPU for accelerating queries are lacking in several areas. First, only particular types of data or data structures in a database can be offloaded. Because GPUs generally increase throughput only for simple data structures, operations on data types and tables that provide additional complexity cannot be offloaded to a GPU, thus limiting the applicability of present deployments. Similarly, when offloading operations to a GPU for large datasets that exceed GPU memory, multiple data transfers occur between the CPU and GPU, reducing the efficiency gains of GPU acceleration. Additionally, because current database engines are configured to operate with a particular database type, any offloading scheme must be particularly tailored to ingest data from that corresponding database type. Furthermore, GPUs may handle different types of data differently which may result in unexpected performance of the query operations when offloaded to the GPUs.

To address these shortcomings, the approaches set forth herein provide a dynamic query execution platform that optimizes database query execution by efficiently offloading operations to a coprocessor. This platform minimizes CPU-GPU data transfer overhead, reduces query latency, and improves resource utilization. The query execution platform may include an interface and input layer capable of translating a database query (e.g., received as a database query plan with the tables and data on which the plan is to be executed) into a format (e.g., tensors) that is accessible to and readily executable by a coprocessor, such as a GPU. For example, the input layer (e.g., an interface) of the query execution platform dynamically translates database queries into an optimized format suited for parallel execution on a coprocessor. This transformation enables efficient processing while reducing computational overhead. The database query translation process may involve storing the query execution plan in the platform's memory and converting its data tables into a format optimized for a target coprocessor. Once the tables have been converted into the optimized format usable by the coprocessor, the query execution platform may prepare the data for executing the query execution plan by providing sets of smaller tables, also referred to as dimension tables, to the coprocessor to build hash tables for each of the dimension tables. After the hash table is generated for each dimension table, the hash table is then stored in a cache that is local to the coprocessor. Once all hash tables have been generated, the query execution platform may provide one or more larger tables, also referred to as a fact table, to the coprocessor to perform the operations indicated by the query execution plan. It should be noted that although some examples discussed herein refer to the optimized format used by the coprocessor as tensors (e.g., for GPUs used as coprocessors), the translated format of the data tables may be any format applicable to a corresponding coprocessor, such as an FPGA or any other hardware accelerator.

To further enhance database query performance, the query execution platform dynamically selects operators and execution strategies based on the data type and structure. This reduces processing inefficiencies and ensures optimal execution on coprocessor architectures. For example, the query execution plan may include several operations that are performed to obtain a final result of the query. An operator for performing each of the operations in the query execution plan can then be identified. The operation may refer to the general mathematical, arithmetical, or logical concept for execution while the identified operator may include the processing steps necessary to obtain the result of the operation. Additionally, for each operator, a particular implementation of the operator may be identified based on characteristics of the data being operated on (e.g., the type of data, such as an integer, Boolean, string, character, object, etc.). Accordingly, the query execution platform may dynamically select an operator implementation, and generate a GPU runtime, for each operation in the query execution plan based on the data on which the operator is being applied.

Accordingly, one or more of the embodiments disclosed herein provide significant improvements in database query execution speed by optimizing coprocessor utilization, reducing memory transfer latency, and dynamically adapting query execution strategies. Additionally, the query acceleration can be dynamically applied to and used by any type of database and database host and can further be utilized with various coprocessor architectures and configurations. These improvements are significant for both database users and database services. The acceleration of query execution provides for improved performance of applications that are using and accessing a database, therefore providing better user experiences for customers. Additionally, the dynamic nature of the query execution platform allows the platform to be easily plugged into and used by any database host (e.g., just by an API of the platform). Thus, database administrators can accelerate query execution and reduce latency for their users simply by directing execution of the query to the query execution platform API without any additional or major updates, therefore reducing costs associated with upgrades all while increasing quality of service.

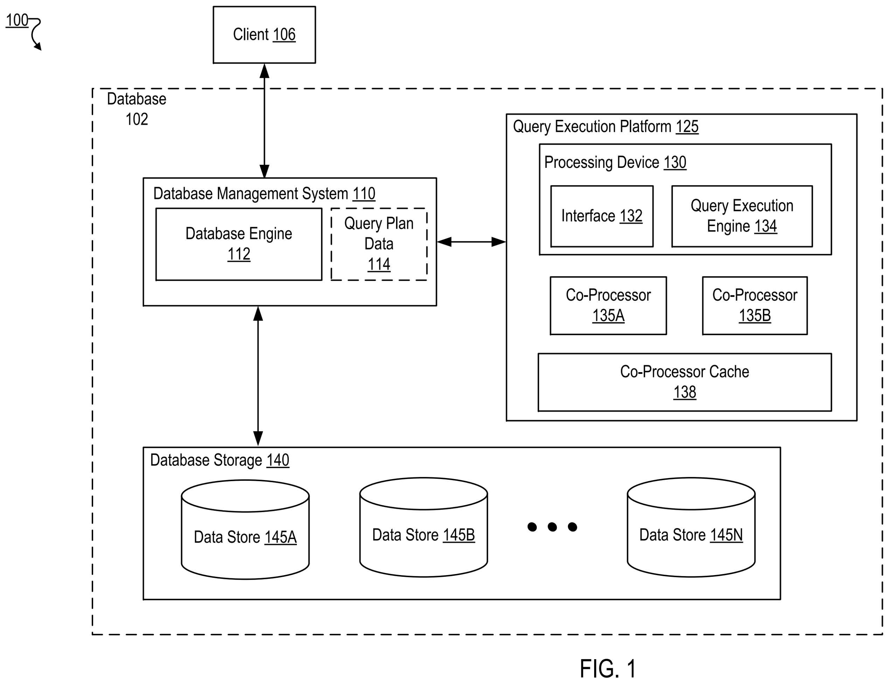

Fig. 1 sets forth an example system 100 for database query execution using a coprocessor in accordance with one or more embodiments. The example system 100 of Fig. 1 includes a database 102 in communication with a client 106. The client 106 may be client device, such as a laptop or desktop computer, a server, a mainframe, a virtual machine, container, application, or any other software or hardware. The database 102 may include a database management system 110, database storage 140, and a query execution platform 125. Database management system 110 may be a database server or other database host to managing data within a database, including data storage, data retrieval, and communication with a client device. Database management system 110 may further include database engine 112 which may be software for implementing data management, such as storing data in one or more storage devices or storage systems and managing data retrieval and query execution. In one or more embodiments, the database engine 112 may generate a query execution plan (e.g., via an optimizer and other components) in response to a query received from the client 106. A query execution plan may include, for example, one or more operations performed on one or more tables, or datasets, stored in data stores 145A-N of database storage 140. A query execution plan may be a detailed roadmap to execute a received query. A query execution plan may include information about the steps and operations the system will perform, such as table scans, joins, and index usage, to retrieve the requested data efficiently. For example, client 106 may issue a database query to the database 102 which may include one or more logical operations to perform on and between data and tables stored in database storage 140. The database management system 110 may identify the requested operations and the data associated with the query. For example, the database management system 110 may identify the tables and rows, columns, etc. associated with the query. The database engine 112 may generate a query execution plan that performs the requested operations to provide the result desired by the client 106. The database engine 112 may also optimize the query execution plan to execute efficiently and quickly (e.g., based on a size of data tables included in the request, the types of operations requested, etc.). The database engine 112 may then provide query plan data 114, including the query execution plan and the data tables associated with the query plan, to query execution platform 125.

In one or more embodiments, query execution platform 125 includes a processing device 130 and one or more coprocessors 135A-B. Additionally, query execution platform may include coprocessor cache 138 which may be incorporated in coprocessors 135A-B or may be a cache that is local to but separate from the coprocessors 1356A-B. The processing device 130 may execute an interface 132 (e.g., an application programming interface) with which the database management system 110 communicates to perform and offload query plan execution to one or more coprocessors (e.g., coprocessors 135A-B). For example, the database engine 112 may provide query plan data 114 to the API of the query execution platform 125 and request the completed result of the query execution plan in return. The interface 132 may present one or more endpoints with which the database engine 112 and database management system 110 may communicate. In one or more embodiments, the interface 132 may present endpoints usable by database engines for various types of databases. Processing device 130 may also execute a query execution engine 134 for performing and offloading execution of the query execution plan. In one or more embodiments, the interface 132 may convert the query plan data 114 into a form usable by the query execution engine 134 and executable by the one or more coprocessors 135A-B. The interface 132 may, for example, translate a query execution plan of the query plan data 114 into a query plan that is executable by the coprocessors 135A-B. Additionally, the interface 132 may translate the data tables of the query plan data 114 into a format usable by the coprocessors 135A-B (e.g., data tables converted to tensors for applying an operation on the data at a GPU).

As discussed in more detail below, the query execution engine 134 may identify an operator for each operation within the query execution plan based on the type of the one or more coprocessors 135A-B deployed to the query execution platform. During compilation of the query execution plan, the query execution engine 134 may identify an implementation for each operator based on characteristics of the data to which the operator is being applied. Therefore, each of the operators may be optimized with an implementation most suitable for application to the corresponding data on the coprocessor 135A-B. Additionally, the coprocessors 135A-B may utilize a local coprocessor cache 138 for storing temporary data during execution of the operators of the query execution plan. For example, for a join operation the one or more coprocessors m135A-B may generate a hash table for each dimension table (e.g., the smaller tables in the join) and store the hash tables in the coprocessor cache 138 so that the data does not have to be returned to the processing device 130 and then retrieved again upon when joining the hash tables with the fact table. Additionally, the coprocessor cache 138 may be used by the coprocessors 135A-B to store partial results for an operation until the entire operation is complete. For example, if a fact table is too large to fit in coprocessor memory, the fact table may be split into fragments that can then be individually applied to the hash tables, the results of each fragment being stored to the coprocessor cache 138. Thus, when the operation is completed, a full result can be returned to the processing device 130 and the database engine 112. The coprocessor cache 138 may be used in a similar manner for any of the various database operations performed by the coprocessors 135A-B.

In some embodiments, when a query execution plan is received from the database host, the query execution platform processes the query by first parsing the plan and decomposing it into execution fragments. If the dataset to be processed is large, the fact table may be partitioned into smaller segments that are processed sequentially to optimize memory usage on the coprocessor. To minimize redundant computations, the query execution platform may precompute hash tables for dimension tables that fit within the coprocessor's memory, allowing repeated access without incurring costly data transfers between the CPU and the coprocessor.

In some embodiments, once the hash tables have been generated and stored in local memory on the coprocessor, execution proceeds by streaming fact table segments in batches. Each batch may be executed against the precomputed hash tables, reducing latency and avoiding unnecessary recomputation. Operator selection may be dynamically performed based on the data characteristics and the coprocessor architecture, ensuring that the most efficient computational path is chosen for each operation.

In some embodiments, at execution time, the query plan may be compiled into low-level computational kernels optimized for the coprocessor. These kernels may include precompiled CUDA kernels for GPU execution, FPGA-configured bitstreams for customized acceleration, or machine learning compiler-generated routines for AI processors. After the execution of all query segments is complete, the coprocessor may transmit the final aggregated results back to the database host. By leveraging local caching, selective query decomposition, and adaptive operator selection, the system may maximize performance while minimizing CPU-GPU communication overhead.

Additionally, upon offloading plan fragments to a coprocessor, if the execution of the plan fragment at the coprocessor fails then the plan fragment may be returned to the CPU for executing the failed plan fragment. For example, if a plan fragment fails at a coprocessor because, for example, the coprocessor runs out of memory or is overloaded with other requests, etc. then the CPU can execute the plan fragment to avoid failing execution of the entire query. Accordingly, the coprocessors can be used as accelerators of query execution but are not required and therefore can be bypassed in case of errors or determination that particular plan fragments should be executed by the CPU rather than the coprocessors.

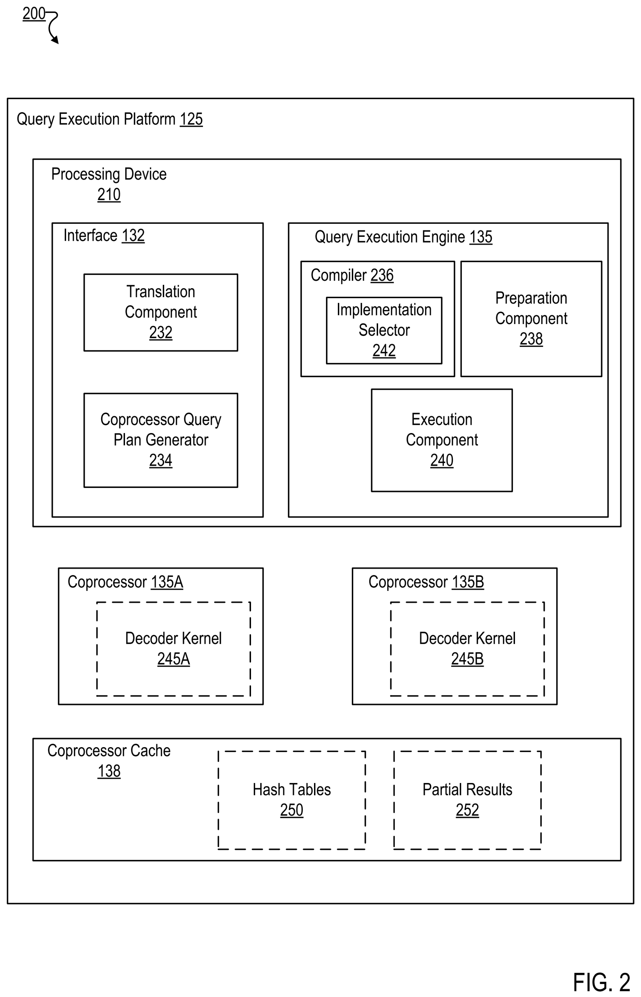

Fig. 2 sets forth a diagram illustrating an example system 200 for database query execution using a coprocessor in accordance with one or more embodiments. System 200 includes a query execution platform 125 for offloading database query operations from a CPU to one or more coprocessors (e.g., GPUs, FPGAs, hardware accelerators, etc.). Query execution platform 125 includes a processing device 210 which may execute an interface 132 (e.g., an API) with one or more endpoints to which a database engine can communicate to initiate offloading of query operations to one or more coprocessors 135A-B and a query execution engine 134, which may be in communication with or included within the interface 132, to orchestrate the offloading of the query operations to the coprocessors 135A-B. In particular, interface 132 may include a translation component 232 and a coprocessor query plan generator 234. Upon receiving database query data (e.g., an execution plan and the data tables associated with the plan), the translation component 232 may translate the received data tables into a format that can be operated on by the coprocessors 135A-B. For example, the translation component 232 may convert the data tables into vectors or tensors that can be input into a GPU, or other coprocessor, for optimal performance. The coprocessor query plan generator 234 may identify the query execution plan from the received request and convert the query execution plan into an execution plan executable by the coprocessors. In one or more embodiments, the coprocessor query plan generator 234 may store the received query execution plan in memory associated with the processing device 210 in a format and configuration specific to one or more coprocessor 135A-B. In one or more embodiments, the interface 132 can also receive an indication of the type of coprocessor that is to be used for query acceleration and the coprocessor query plan generator 234 may generate a coprocessor query execution plan specific to the type of coprocessor to be used. In particular, the translation component 232 may convert the data tables into a format corresponding to the requested coprocessor type and the coprocessor query plan generator 234 may store the query execution plan according to the requested coprocessor type.

The query execution engine 134 may include a compiler 236 including an implementation selector 242, a preparation component 238, and an execution component 240. The compiler 236 may compile each operation in the query execution plan for the target coprocessor. In particular, the compiler 236 may identify one or more operators to perform, by the target coprocessor, a query operation of the query execution plan. Additionally, for each operator, the implementation selector 242 of the compiler 236 may identify a specific implementation of the operator to be applied based on the data associated with the operation. For example, several operators and operator implementations may be registered for each of the coprocessors 135A-B deployed by the query execution platform. The operator implementations may correspond to an optimal manner to apply the operator the target data of the operator. For example, one operator implementation may be selected if the operator is being applied to a first type of data (e.g., integer) while a different operator implementation may be selected if the operator is being applied to a second type of data (e.g., a date). Thus, the compiler 236 may compile the various operators and operator implementations for execution. The preparation component 238 may prepare the data associated with an operation of the query execution plan by instructing the one or more coprocessors 135A-B to generate a hash table 250 for each of the dimension tables (e.g., smaller tables) associated with the query. For example, the preparation component 238 may iteratively provide each dimension table to one of the coprocessors 135A-B to generate a hash table for the dimension table. For efficiency, the coprocessor 135A-B may store the generated hash tables 250 to coprocessor cache 138 rather than returning the hash tables 250 to the processing device 210. After the hash tables 250 have been completed, execution component 240 may instantiate a runtime to the one or more coprocessors 135A-B to execute the selected operator implementations. In particular, the execution component 240 may provide the fact table to the one or more runtimes in segments and the runtime may retrieve the hash tables 250 from the coprocessor cache to execute the operator for the fact table against the hash tables 250. Because the fact table is provided in chunks, the runtime may store the partial results 252 after application of the operator to a chunk of the fact table in the coprocessor cache 138 until the entire fact table has been processed. The full result can then be returned to the processing device 210 after completion of the query operation.

In some embodiments, each coprocessor 135A-B may include a decoder kernel 245A-B to efficiently decode compressed data received from the processing device 210. For example, because memory space in the coprocessor may be limited, the data may be compressed via bit packing to reduce the overhead of the decoding at the coprocessor. Similarly, embodiments may use run-length encoding (RLE) where consecutive occurrences of the same data value are stored as a single data value and a count to reduce the amount of data sent to and from the CPU and coprocessor. Thus, the decoder kernel 245A-B may decode the compressed data to obtain the original data for processing. In some embodiments, decoding the data from the compressed state includes batching portions of the decoded data together for application of an operator executing on the corresponding coprocessor 135A-B. For example, each rowgroup for each column in the input data may be decoded (e.g., into individual tensors). The rowgroups may be relatively small, and therefore multiple decoded rowgroups may be batched together for best operation of the coprocessor.

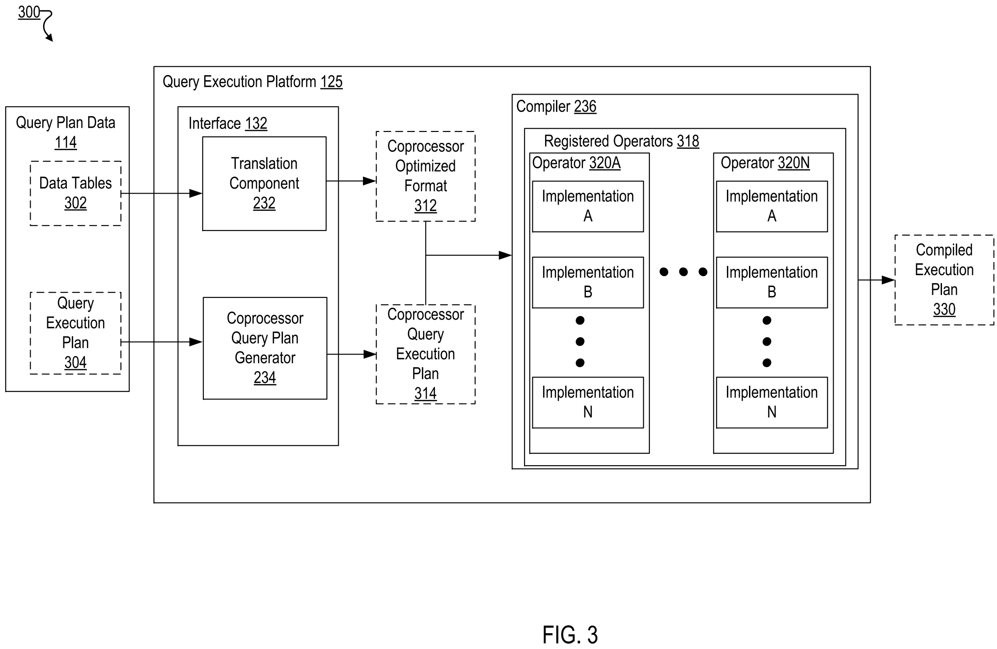

Fig. 3 sets forth a diagram illustrating an example process flow in a system 300 for database query execution using a coprocessor in accordance with one or more embodiments. In particular, Fig. 3 depicts query execution platform 125, as described above with respect to Figs. 1 and 2, in further detail. As depicted, query execution platform 125 includes an interface 132 and a compiler 236, which in combination, generate a compiled execution plan 330 executable by a coprocessor. Interface 132 includes a translation component 232 that intakes data tables 302 from a query plan data 114 and translates the data tables into a coprocessor optimized format 312. For example, the translation component 232 may ingest a data table in format associated with a database and convert the data table into a set of vectors and tensors representing the data table. The translation component 232 may perform the translation on all or some of the data tables 302 received with the query plan data 114. The coprocessor query plan generator 234 may obtain the query execution plan 304 from the query plan data 114 and generate a coprocessor query execution plan 314. The coprocessor query execution plan 314 may be a one to one translation of the query execution plan 304 to the coprocessor query execution plan 314 which may then be stored in memory of the query execution platform 125. The coprocessor optimized format 312 of the data tables and the coprocessor query execution plan 314 may be provided to the compiler 236.

The compiler 236 may compile the coprocessor query execution plan 314 with the coprocessor optimized format 312 as the input data for the various operators in the coprocessor query execution plan 314. The compiler 236 may further identify and bind a particular implementation for each operator in the coprocessor query execution plan 314. For example, upon allocation of a coprocessor to the query execution platform 125 a set of operators 318 may be registered with the coprocessor along with various implementations of the operators 320A-N. The compiler 236 may therefore select one of the implementations for the registered operators 318 for each operation in the query plan. In particular, the compiler 236 may select the implementation based on characteristics of the data to which the operator is being applied. For example, the compiler may select the implementation based on data type, whether nulls are included, a range of values of the data, statistics of the data, or any other characteristics of the data. In one or more embodiments, the compiler 236 generates a compiled execution plan 330 which can be stored in memory of the query execution platform 125 for execution. In other embodiments, the compilation of the operator implementations may be performed as a just-in-time compilation where the implementations are selected and compiled for execution while the query plan is being executed. In some examples, the compiler 236 may also determine or identify sequences of operators in the coprocessor query execution plan 314 and select an implementation for a combination of the operators (e.g., the operator implementations may be wrapped into a single implementation kernel). The output of the compiler 236 is thus a compiled execution plan 330.

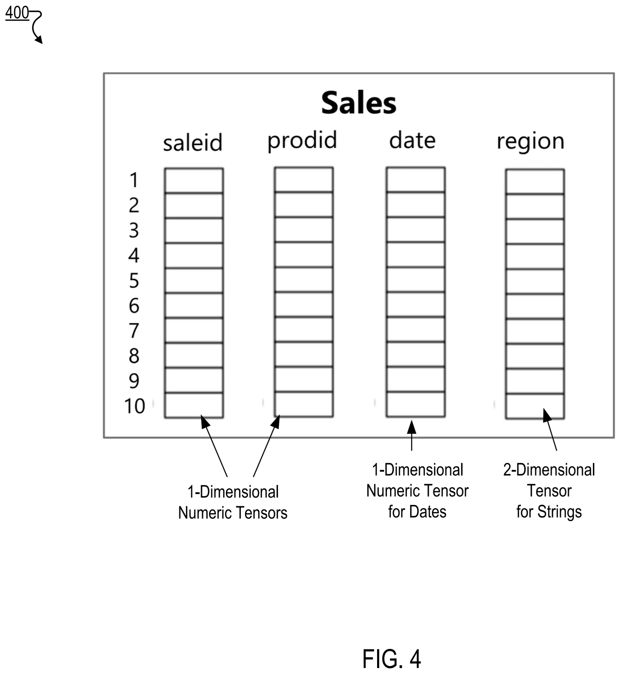

Fig. 4 illustrates an example database table translation into tensors for offloading query execution, in accordance with one or more embodiments. It should be noted that this is one of many possible methods for translation of database tables to an optimized format for query plan execution on a coprocessor. For example, the resulting format may be optimized for any type of corresponding coprocessor, such as an FPGA or any other hardware accelerator. As depicted in Fig. 4, a database table may include columns and rows of related information. For example, table 400 includes various data about sales, including row entries having a sale identity (saleid), a produce identity (prodid), a date of the sale (date), and a region of the sale. Each column in the table may correspond to a particular type of data and may therefore be converted into an individual tensor including the entries in the column. For example, the sale id and product id columns may include numeric data (e.g., integers, double, float, etc.) and may therefore each be converted into a one-dimensional tensor including the column data. Similarly, the date column may include numeric data that indicates a date or date and time of a sale and therefore can be converted into a one-dimensional tensor that includes the dates. Finally, the region column may include strings of characters which cannot be fit into a one-dimensional tensor. Therefore, the query execution platform described herein may create a two-dimensional tensor having a first dimension the size of the number of entries in the table and a second dimension the size of a maximum string length for the region entries. Thus, each of the columns in the sales table may be converted into a tensor that can be processed quickly by a coprocessor.

In one or more embodiments, the query execution platform is designed to operate seamlessly across multiple coprocessor architectures, including GPUs, FPGAs, and AI accelerators. While GPUs excel at parallel floating-point arithmetic, FPGAs provide hardware-level customization, allowing specific database operations to be mapped to reconfigurable logic gates for optimal efficiency. AI accelerators, such as tensor processing units (TPUs), specialize in executing workloads in tensorized formats, providing advantages for certain classes of query operations.

In one or more embodiments, during query execution, the platform dynamically detects the available coprocessor type and selects the most appropriate execution strategy. If a GPU is present, the system may leverage CUDA-based kernels optimized for high-throughput execution. When an FPGA is detected, the execution plan may be mapped to pre-synthesized FPGA bitstreams, allowing configurable logic blocks to perform operations directly on streaming data. AI accelerators execute tensorized query representations using deep-learning-optimized processing units, enabling efficient handling of certain vectorized operations.

This ability to dynamically adapt execution strategies to different coprocessor architectures may ensure that database query execution remains optimized regardless of the underlying hardware. The query execution platform abstracts away hardware-specific optimizations, allowing seamless interoperability between various database hosts and coprocessing units.

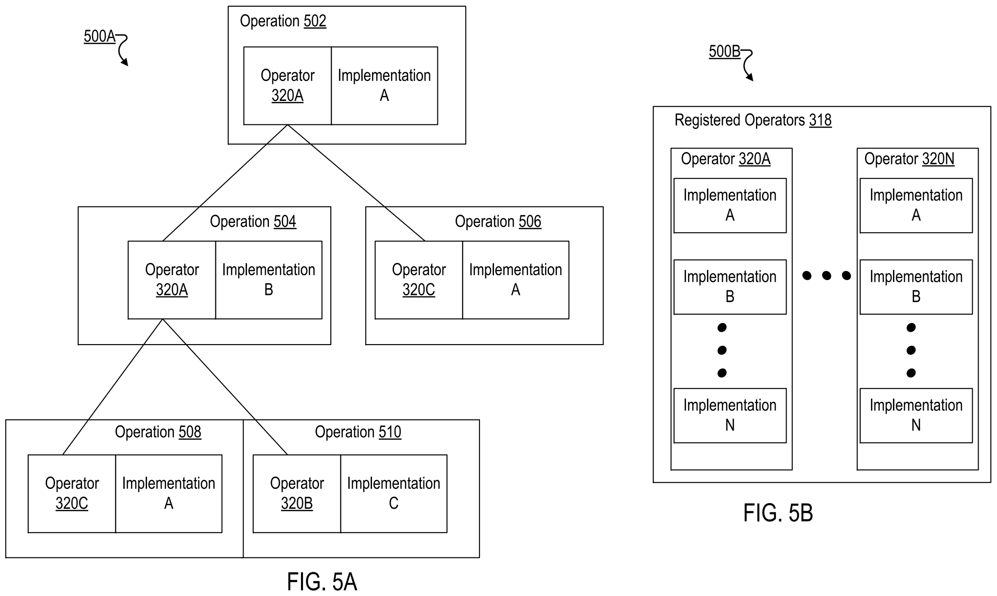

Figs. 5A and 5B illustrate an example query execution plan including selected operators and operator implementations from a set of operators and implementations registered for a coprocessor, in accordance with one or more embodiments. As discussed above, the query execution platform generates an in-memory representation of a physical query execution plan that includes various operations to perform on the data associated with the query. For each operation, one or more operators for physically executing the operations on a coprocessor are identified. For example, as depicted in table 500B of Fig. 5B, several registered operators 318 may previously be registered for the coprocessor and can therefore be compiled into the execution plan and executed by the coprocessor. In the example query execution plan 500A depicted in Fig. 5A, an operator is selected for each operation in the query execution plan. It should be noted, however, that although depicted as including one operator for each operation, multiple operators may be selected and executed for each operation in the query execution plan. For example, at operation 502 operator 320A is selected to perform the operation 502. Additionally, the compiler may select "implementation A" of the operator 320A to be executed by a coprocessor based on the data that the operation 502 is being applied. The operation 502 may, for example, include a reference to the tensors (e.g., columns) from one or more data tables that will be operated on. In one or more embodiments, performance of the query execution plan begins at the leaves of the trees, the results of which are then used further up the tree. For example, operation 508 and 510 may be performed (e.g., via implementation A of operator 320C and implementation C of operator 320B) first, either in parallel or in sequence, after which operation 504 may be performed (e.g., via implementation B of operator 320A) using the results of operations 508 and 510. Similarly, operation 502 may operate on the results of operations 504 and 506. Furthermore, it should be noted that the different implementations of the same operator can be selected depending on the characteristics of the data to which the operator applied. Accordingly, implementation A may be selected for operator 320A at operation 502 while implementation B is selected for operator 320A at operation 504 due to differences in the data on which the operator 320A is being applied in those operations. Accordingly, the query execution platform may dynamically select operator implementations that provide maximum efficiency for each operation and each operator within the query execution plan being executed by the target coprocessor. It should be noted that different coprocessors may include different registered operators so different operators and implementations may also be selected for the operations of the query execution plan depending on the target coprocessor.

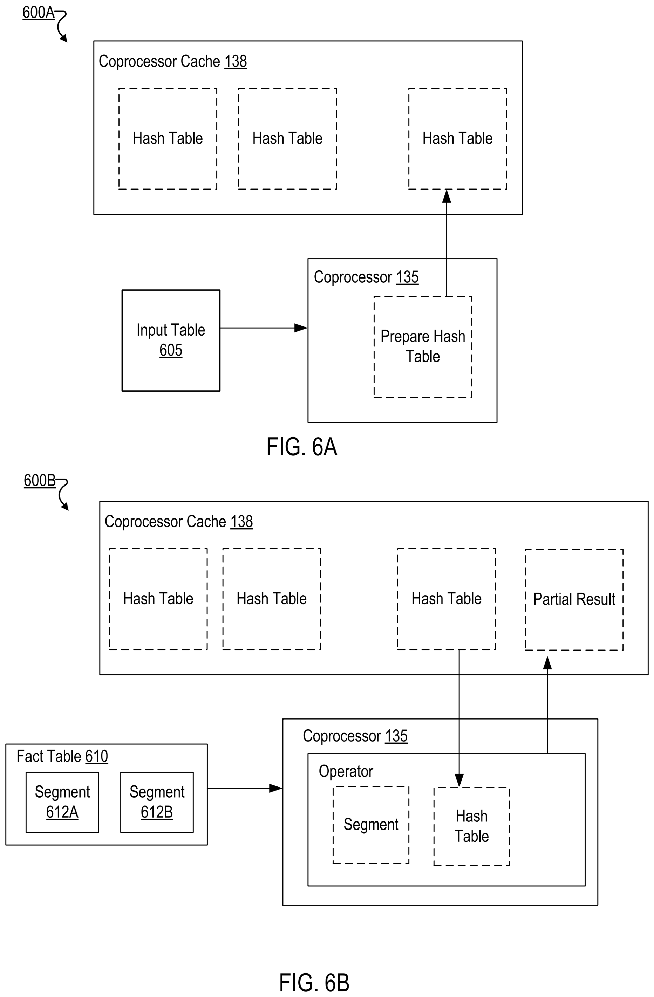

Figs. 6A and 6B preparing data and executing an operator for a database query using a coprocessor in combination with a coprocessor cache in accordance with one or more embodiments. Once a query execution plan has been generated and compiled, the query execution platform may initiate execution of the query execution plan (e.g., starting with operators at the bottom of the tree) on one or more coprocessors. At this point, each table associated with the query is in tensor format, or other target format for the coprocessor, and ready to be provided to a coprocessor for application of the operator to the data. As depicted in diagram 600A, in one or more embodiments, a preparation stage may be performed (e.g., for a hash-join operation, or other operations) in which hash tables are created for each of the smaller tables (e.g., dimension tables) associated with the query. For example, each dimension table (e.g., input table 605) may be provided to the coprocessor 135 to prepare a corresponding hash table. The coprocessor 135 may then store each of the hash tables in the coprocessor cache 138 rather than returning the hash table to the CPU. Accordingly, the coprocessor 135 can quickly access the hash tables without requiring additional encoding and decoding of data between the coprocessor and the CPU. As depicted in diagram 600B of Fig. 6B, once the hash tables have been generated and stored in the coprocessor cache 138, the query execution platform may provide the fact table 610 to the coprocessor 135 for application of the selected operator implementation. In one or more embodiments, if the fact table 610 is too large to fit in memory of the coprocessor 135, the query execution platform may provide the fact table in segments (e.g., segments 612A-B) and sequentially apply the operator to a segment and each of the hash tables. For example, the coprocessor 135 may invoke the operator on a first segment 612A and retrieve each of the hash tables from coprocessor cache 138 to apply the operator to the segment against each hash table. The coprocessor may then store the partial results for each segment of the fact table 610 in the coprocessor cache 138 until all segments of the fact table 610 have been processed. The coprocessor 135 may then return the completed results.

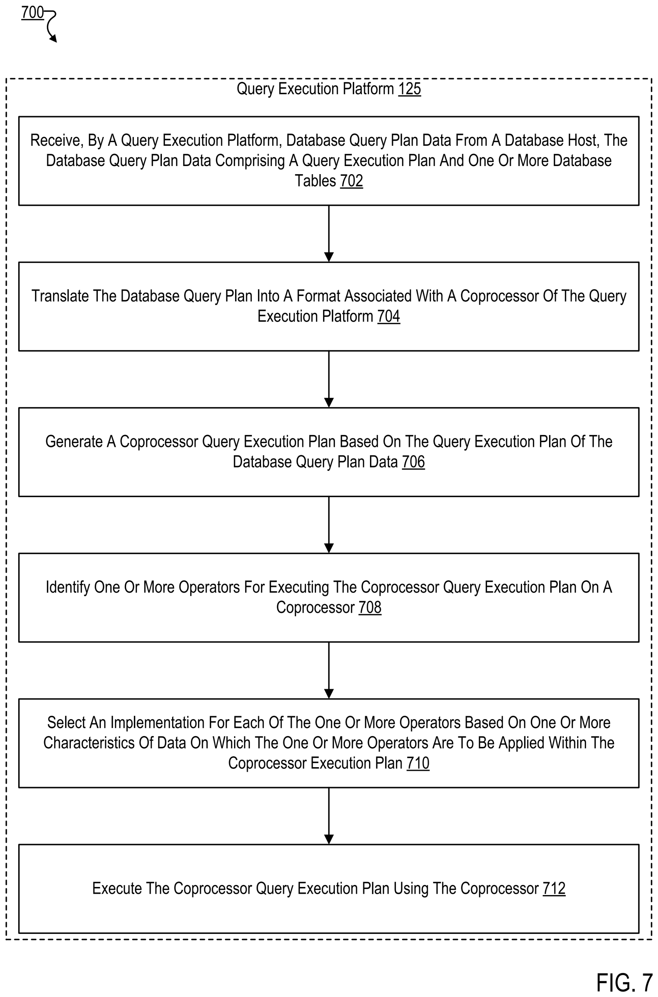

For further explanation, Fig. 7 sets forth a flowchart of an example method 700 of database query execution acceleration using a coprocessor in accordance with one or more embodiments of the present disclosure. The method of Fig. 7 may be performed, for example, by query execution platform 125 of Figs. 1-3, or in another computing system or computing environment as can be appreciated. The method of Fig. 7 includes receiving 702, by a query execution platform, database query plan data from a database host, the database query plan data including a query execution plan and one or more database tables. The query execution plan may include one or more operations to perform on the one or more database tables to obtain the results of a database query. For example, the query execution plan may include a series of operations, which may be represented as a tree structure to be executed from the bottom up (e.g., starting from leaf nodes), where each node in the tree includes an operation performed on at least one of the database tables. The results of each operation may be used by a parent node operation in the query execution plan until a root node and final operation or operations are performed. In one or more embodiments, the database host may be a database server that manages a database, including receiving, orchestrating, and returning results for a query to the database (e.g., from a client device). In some examples, the database host may include a query plan optimizer which generates and optimizes query operations for returning the results of a query. The query plan optimizer may, for example, determine which operations to execute for a query, the data tables on which to apply the operations, and in which order the various operations should occur to obtain the most efficient or quickest result for execution of the query.

In one or more embodiments, receiving 702 the database query plan data from the host database may include receiving the database query plan data at an interface (e.g., API) of the query execution platform. The interface may include one or more endpoints to perform various initializations and preparations for executing the query execution plan on one or more coprocessors (e.g., GPUs, FPGAs, or other hardware accelerators).

The method of Fig. 7 further includes translating 704 the database query plan data into a format associated with a coprocessor of the query execution platform. Additionally, translating 704 the one or more data tables may include converting the database tables into a format optimized for the coprocessor (e.g., tensors for a target GPU, or other format for various other hardware accelerators), as described herein. For example, row groups of each column in the data table may be converted into a corresponding format (e.g., tensor or other format or data structure) which can be input to the target coprocessor.

The method of Fig. 7 further includes generating 706 a coprocessor query execution plan based on the query execution plan of the database query plan data. Generating 706 the coprocessor query execution plan may include, for example, storing the query execution plan in memory including operations that are applicable to a target coprocessor. For example, for each operation in the query execution plan, processing logic may store a corresponding coprocessor specific operation in memory of the query execution platform.

The method of Fig. 7 further includes identifying 708 one or more operators for executing the coprocessor query execution plan on a coprocessor. As discussed above, the coprocessor query execution plan may include one or more operations to be performed on the received data tables (e.g., as translated into tensor form). Identifying 708 the one or more operators may include identifying one or more operators to perform each of the operations defined in the coprocessor query execution plan. For example, each operation in the coprocessor query execution plan may include an operation defining a transformation such as arithmetic, a comparison, a logical operation, or the like. The one or more operators for the coprocessor may implement the operations defined by the coprocessor query execution plan.

The method of Fig. 7 further includes selecting 710 an implementation for each of the one or more operators based on one or more characteristics of data on which the one or more operators are to be applied in the coprocessor query execution plan. As discussed above, each of the one or more operators may implement an operation of the coprocessor query execution plan. Each operator, however, may be implemented in various different ways depending on the characteristics of the data. For example, a comparison operator may be implemented differently on data including integers as compared to data that includes Boolean or data that includes characters or strings. Therefore, various implementations for each operator may be defined, and registered with a coprocessor, such that an operator corresponding to each different type of data or combinations of data associated with an operation is available to the coprocessor. For example, when the coprocessor query execution plan is compiled, the data type or other characteristics associated with each operator defined within the plan may be identified (e.g., via a tag, definition, etc.) and a particular implementation corresponding to the identified data types or characteristics. In one or more embodiments, the characteristics of the data may include a data type, whether the data includes null values, ranges of the included values, or any other statistic about the data.

The method of Fig. 7 further includes executing 712 the coprocessing query execution plan using the coprocessor. In one or more embodiments, executing 712 the coprocessing query execution plan includes providing an operator and the data to be operated on to the coprocessor, for each of the operations in the execution plan. For example, the query execution platform may encode the operator and the tensors associated with the data tables on which the operator is to be applied, and provide the encoded data to the coprocessor. In one or more embodiments, the coprocessor may decode the encoded data to execute the operator on the original data, while in other embodiments, the coprocessor may execute the operator on the encoded data, depending on the type of data. Additionally, the operations of the query execution plan may be executed in parallel, in series, or a combination of parallel and series. For example, if multiple coprocessors are deployed in the query execution platform, then operations in the query plan that do not require data from other operations (e.g., leaf nodes) may be executed in parallel. Additionally, the operator may be applied to different fragments of the input data tables in parallel, such as via different threads of a coprocessor. Thus, execution of the query execution plan may be accelerated by applying the highly parallel processing of coprocessors, such as GPUs, data in a simplified tensor format. As discussed in more detail below, a cache that is deployed local to the coprocessor may be used to cache partially processed data to avoid communicating (e.g., including encoding and decoding) the data between CPU and the coprocessor multiple times.

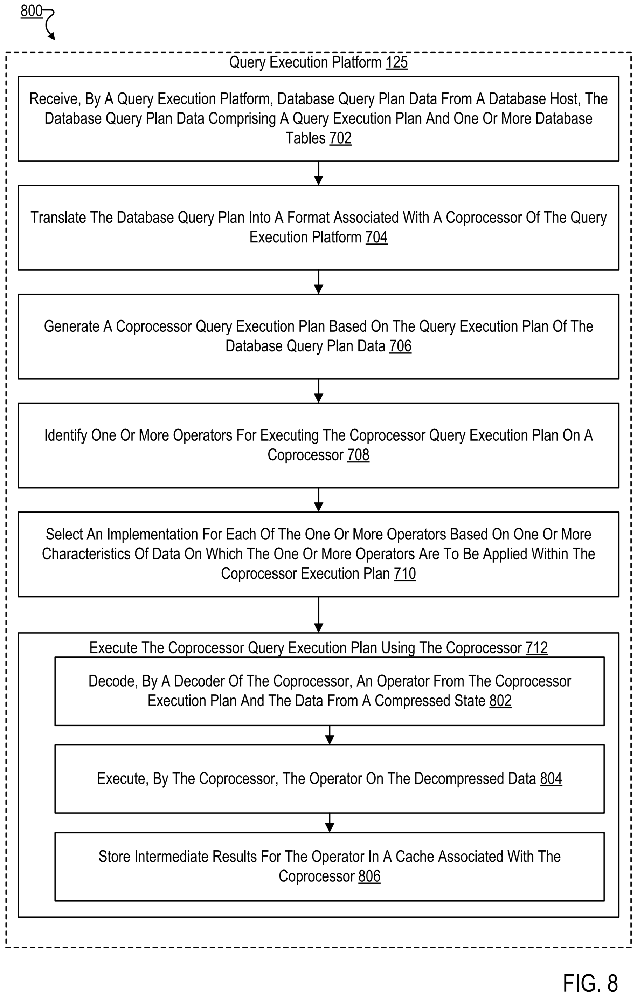

For further explanation, Fig. 8 sets forth a flowchart of another example method 800 of database query execution acceleration using a coprocessor in accordance with one or more embodiments of the present disclosure. Similar to Fig. 7, the method of Fig. 8 includes receiving 702, by a query execution platform, database query plan data from a database host, the database query plan data including a query execution plan and one or more database tables, translating 704 the database query plan into a format associated with a coprocessor of the query execution platform, generating 706 a coprocessor query execution plan based on the query execution plan of the database query plan data, identifying 708 one or more operators for executing the coprocessor query execution plan on a coprocessor, selecting 710 an implementation for each of the one or more operators based on one or more characteristics of data on which the one or more operators are to be applied in the coprocessor query execution plan, and executing 712 the coprocessing query execution plan using the coprocessor.

In addition, executing 712 the coprocessor query execution plan using the coprocessor further includes, as depicted in Fig. 8, decoding 802, by a decoder kernel of the coprocessor, an operator from the coprocessor execution plan and the data associated with the operator from a compressed state, executing 804, by the coprocessor, the operator on the decompressed data, and storing 806 intermediate results for the operator in a cache associated with the coprocessor. In one or more embodiments, decoding the data from the compressed state includes batching portions of the decoded data together for application of the operator. For example, each rowgroup for each column in the input data may be decoded (e.g., into individual tensors). The rowgroups may be relatively small, and therefore multiple decoded rowgroups may be batched together for best operation of the coprocessor. Additionally, because memory space in the GPU may be limited, the data may be compressed via bit packing to reduce the overhead of the decoding at the coprocessor. Similarly, embodiments may use run-length encoding (RLE) where consecutive occurrences of the same data value are stored as a single data value and a count to reduce the amount of data sent to and from the CPU and coprocessor.

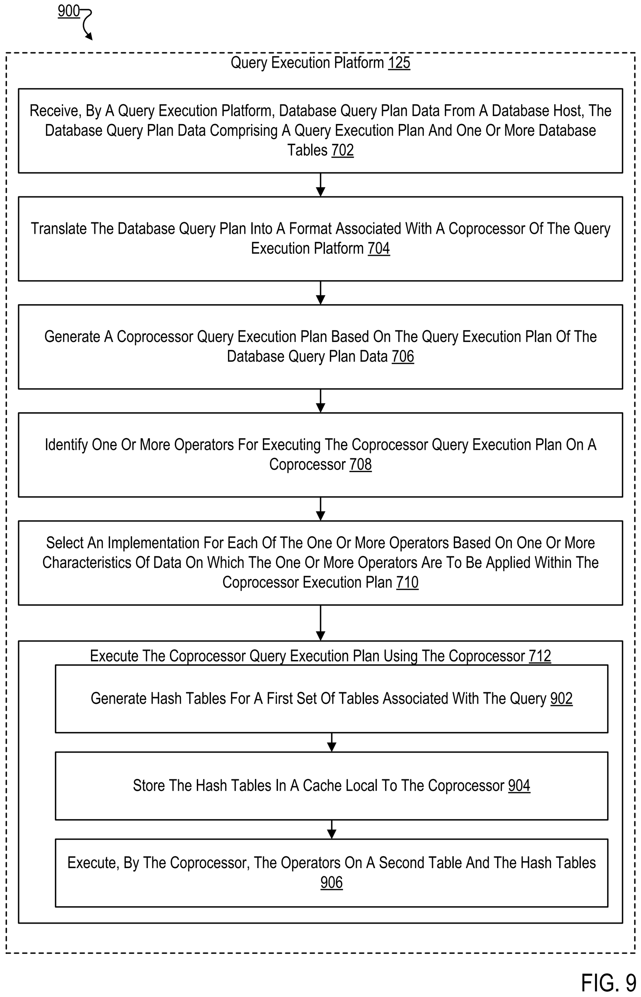

For further explanation, Fig. 9 sets forth a flowchart of another example method 900 of database query execution acceleration using a coprocessor in accordance with one or more embodiments of the present disclosure. Similar to Fig. 7, the method of Fig. 9 includes receiving 702, by a query execution platform, database query plan data from a database host, the database query plan data including a query execution plan and one or more database tables, translating 704 the database query plan into a format associated with a coprocessor of the query execution platform, generating 706 a coprocessor query execution plan based on the query execution plan of the database query plan data, identifying 708 one or more operators for executing the coprocessor query execution plan on a coprocessor, selecting 710 an implementation for each of the one or more operators based on one or more characteristics of data on which the one or more operators are to be applied in the coprocessor query execution plan, and executing 712 the coprocessing query execution plan using the coprocessor.

In addition, executing 712 the coprocessor query execution plan using the coprocessor further includes, as depicted in Fig. 9, generating 902 hash tables for a first set of tables associated with the query, storing the hash tables in a cache local to the coprocessor 904, and executing, by the coprocessor, the operators on a second table and the hash tables 906. In one or more embodiments, the query execution platform may initiate execution of a compiled query execution plan on the coprocessor. As discussed above, each table associated with the query may be in the form of one or more tensors for input to the coprocessor. An operator may be loaded to the coprocessor for application to the data. In one or more embodiments, a preparation stage may be performed (e.g., for a hash-join operation, or other operations) in which hash tables are created for each of the smaller tables (e.g., dimension tables) associated with the query. For example, each dimension table may be provided to the coprocessor to prepare a corresponding hash table. The coprocessor may then store each of the hash tables in the coprocessor cache. Accordingly, the hash tables may be quickly accessible by the coprocessor without requiring additional encoding and decoding of the data between the coprocessor and the CPU. The query execution platform may then provide the fact table to the coprocessor for application of the selected operator implementation. In one or more embodiments, if the fact table is too large to fit in memory of the coprocessor, the query execution platform may provide the fact table in segments and sequentially apply the operator to a segment and each of the hash tables. For example, the coprocessor may invoke the operator on a first segment by retrieving each of the hash tables from coprocessor cache and applying the operator to the segment against each hash table. The coprocessor may store partial results for each segment of the fact table in the coprocessor cache until all segments of the fact table have been processed. The coprocessor may then return the completed results.

In some embodiments, to facilitate efficient query execution on coprocessors, the query execution platform may translate database queries into a tensor-based representation. This transformation enables structured data to be processed efficiently by parallel computing architectures, particularly GPUs and AI accelerators.

In this process, each relational database table column may be converted into a tensorized format that is natively supported by the target coprocessor. For instance, numerical columns such as sales figures or transaction IDs are mapped to one-dimensional tensors containing integer or floating-point values. String-based columns are transformed into two-dimensional tensor representations to maintain efficient memory alignment. The conversion of database tables into tensors allows the coprocessor to operate on them using highly parallelized computation models.

In some embodiments, the transformation of query execution plans into tensor-based representations also extends to relational operations. Join operations, for example, are reformulated as tensor indexing operations, while aggregations such as sum and average are executed using vectorized reduction functions. This allows the system to fully exploit the inherent parallelism of coprocessors, improving execution efficiency compared to traditional CPU-based database query processing. By representing database queries as tensorized operations, the system enables efficient execution across different coprocessor architectures while maintaining compatibility with a wide range of database engines.

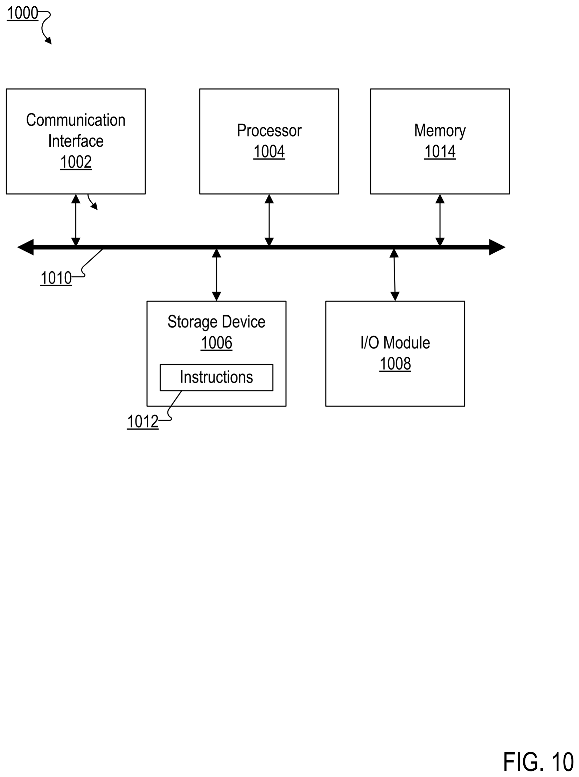

For further explanation and as an additional example of a supporting technology for performing the actions described above, Fig. 10 illustrates an exemplary computing device 1000 that may be specifically configured to perform one or more of the processes described herein. As shown in Fig. 10, computing device 1000 may include a communication interface 1002, a processor 1004, a storage device 1006, an input/output (I/O) module 1008, and computer memory 1014 communicatively connected one to another via a communication infrastructure 1010. While an exemplary computing device 1000 is shown in Fig. 10, the components illustrated in Fig. 10 are not intended to be limiting. Additional or alternative components may be used in other embodiments. Components of computing device 1000 shown in Fig. 10 will now be described in additional detail.

Communication interface 1002 may be configured to communicate with one or more computing devices. Examples of communication interface 1002 include, without limitation, a wired network interface (such as a network interface card), a wireless network interface (such as a wireless network interface card), a modem, an audio/video connection, and any other suitable interface.

Processor 1004 generally represents any type or form of processing unit capable of processing data and/or interpreting, executing, and/or directing execution of one or more of the instructions, processes, and/or operations described herein. Processor 1004 may perform operations by executing computer-executable instructions 1012 (e.g., an application, software, code, and/or other executable data instance) stored in storage device 1006.

Storage device 1006 may include one or more data storage media, devices, or configurations and may employ any type, form, and combination of data storage media and/or device. For example, storage device 1006 may include, but is not limited to, any combination of non-volatile media and/or volatile media. Electronic data, including data described herein, may be temporarily and/or permanently stored in storage device 1006. For example, data representative of computer-executable instructions 1012 configured to direct processor 1004 to perform any of the operations described herein may be stored within storage device 1006. In some examples, data may be arranged in one or more databases residing within storage device 1006.

I/O module 1008 may include one or more I/O modules configured to receive user input and provide user output. I/O module 1008 may include any hardware, firmware, software, or combination thereof supportive of input and output capabilities. For example, I/O module 1008 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1008 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1008 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 1000.

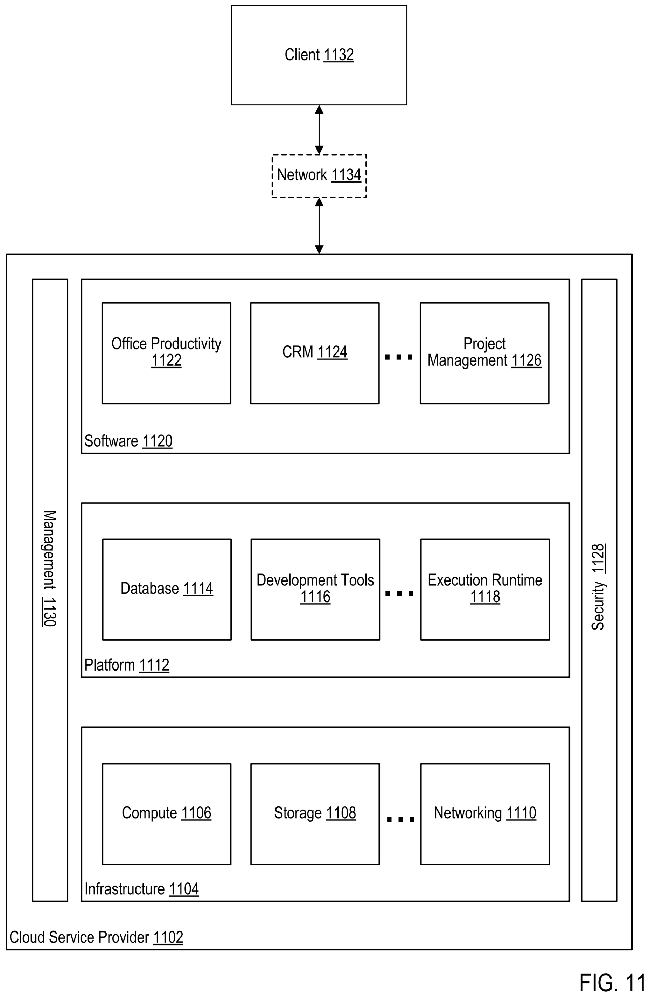

For further explanation and as an additional example of a supporting technology for performing the actions described above, Fig. 11 sets forth a block diagram of a cloud service provider service architecture in accordance with one or more embodiments. The cloud service provider 1102 can deliver a variety resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others.

Fig. 11 depicts an embodiment where software 1120 is delivered as a service. Software-as-a-service ('SaaS') is a model where software applications are delivered over the internet as-a-service. Rather than installing and maintaining software locally (e.g., at client 1132), users can access software via a web browser or other network connected interface (e.g., via network 1134), eliminating the need for complex software and hardware management on the client-side. In Fig. 11, as examples of software 1120 that can be delivered as-a-service, the illustrated embodiment includes office productivity 1122 software, customer relationship management ('CRM') 1124 software, and project management 1126 software. The office productivity 1122 software can include applications designed to facilitate common business and personal tasks, including word processing applications, applications for spreadsheet creation, presentation design applications, and many others. The CRM 1124 software can include applications for managing a business organization's relationships and interactions with customers and potential customers. The project management 1126 software can include applications designed to help teams plan, organize, and manage projects efficiently by facilitating collaboration and tracking the progress of projects. Readers will appreciate that in other embodiments, other types of software may be delivered using a SaaS model.

Fig. 11 depicts an embodiment where platforms 1112 can be delivered as a service. Platform-as-a-service ('PaaS') is a model that provides cloud customers with platform resources that they can use to develop, run, and manage applications without the complexity of such deploying and managing such infrastructure on their own (e.g., at client 1132). In Fig. 11, as examples of platform 1112 resources that can be delivered as-a-service, the illustrated embodiment includes database 1114 services, development tools 1116 services, and execution runtime 1118 services. The database 1114 services can be used to provide access to databases without management overhead for the user (e.g., client 1132) as the cloud service provider 1102 manages the provisioning, scaling, and maintenance of the databases. The development tools 1116 services can provide developers with tools to design, develop, test, and deploy applications without needing to manage the underlying infrastructure. The execution runtime 1118 services can provide environments where applications or other forms of computer program code can be executed, including services to scale the execution environment. Readers will appreciate that in other embodiments, other platform resources may be delivered using a PaaS model.

Fig. 11 depicts an embodiment where infrastructure 1104 can be delivered as a service. Infrastructure-as-a-Service ('IaaS') is a model that provides virtualized computing resources to client 1132 over the internet (e.g., network 1134), such that infrastructure such as servers, storage, networks, and others may be leased on demand rather than purchasing and maintaining physical hardware. In Fig. 11, as examples of infrastructure 1104 resources that can be delivered as-a-service, the illustrated embodiment includes compute 1106 services, storage 1108 services, and networking 1110 services. The compute 1106 services can be used to provide on-demand access to computational resources such as VMs, containers, and serverless functions, where the cloud service provider 1102 manages the provisioning, scaling, and maintenance of such resources. The storage 1108 services can provide storage resources that can be used to store and access data, without the need for customers to purchase and manage on-premises physical storage resources. The networking 1110 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider 1102 of Fig. 11 also provides management 1130 resources. The management 1130 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider 1102 of Fig. 11 also provides security 1128 resources. The security 1128 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider 1102. For example, the virtual machines, containers, and pods described above may all be delivered via a cloud service provider 1102. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method of accelerating database queries, comprising: receiving, by a query execution platform, database query plan data from a database host, the database query plan data comprising a query execution plan and one or more database tables; translating the database query plan data into format associated with a coprocessor of the query execution platform; generating a coprocessor query execution plan for the coprocessor based on the query execution plan of the database query plan data; identifying one or more operators for executing the coprocessor query execution plan; selecting an implementation for each of the one or more operators based on one or more characteristics of data on which the one or more operators are to be applied based on the coprocessor execution plan; and executing the coprocessor query execution plan using the coprocessor.
2. The method of any combination of one or more of the statements above, wherein translating the database query plan data comprises: converting the one or more database tables into a plurality of tensors.
3. The method of any combination of one or more of the statements above, further comprising: decoding a plurality of fragments of the database query plan data into a plurality of tensors; and concatenating the plurality of fragments into an input group.
4. The method of any combination of one or more of the statements above, wherein the one or more operators comprise a query operation to be performed on one or more of the plurality of tensors using the coprocessor and wherein the implementation of the one or more operators comprises the query operation implemented for the coprocessor and the type of data in the one or more of the plurality of tensors.
5. The method of any combination of one or more of the statements above, wherein the one or more characteristics of the data comprises at least one of a type of the data, a range of the data, or statistics of the data.
6. The method of any combination of one or more of the statements above, wherein the coprocessor comprises at least one of a graphics processing unit (GPU), artificial intelligence hardware accelerator, or a field programmable gate array (FPGA).
7. The method of any combination of one or more of the statements above, wherein executing the coprocessor query execution plan comprises: generating hash tables for a first set of tables associated with the query; storing the hash tables of tables in a cache local to the coprocessor; and executing, by the coprocessor, the operators on a second table and the first set of hash tables.
8. The method of any combination of one or more of the statements above, wherein executing the operators on the second table and the first set of hash tables comprises: executing the operators on a plurality of segments of the second table; and returning, to the database host, a result from the operator on the plurality of segments of the second table.
9. The method of any combination of one or more of the statements above, wherein executing the coprocessor query execution plan comprises: generating hash tables for a first set of tables associated with the database query plan data; storing the hash tables of tables in a cache local to the coprocessor; and executing, by the coprocessor, the one or more operators on a second table and the hash tables generated for the first set of tables.
10. The method of any combination of one or more of the statements above, wherein executing the one or more operators on the second table and the hash tables generated for the first set of tables comprises: executing the one or more operators on a plurality of segments of the second table; and returning, to the database host, a result from the one or more operators executed on the plurality of segments of the second table.
11. An apparatus for database query acceleration using a coprocessor, comprising: a memory; and one or more processing devices, operatively coupled to the memory, the one or more processing devices configured to: receive, by a query execution platform, database query plan data from a database host, the database query plan data comprising a query execution plan and one or more database tables; translate the database query plan data into format associated with a coprocessor of the query execution platform; generate a coprocessor query execution plan for the coprocessor based on the query execution plan of the database query plan data; identify one or more operators for executing the coprocessor query execution plan; select an implementation for each of the one or more operators based on one or more characteristics of data on which the one or more operators are to be applied based on the coprocessor execution plan; and execute the coprocessor query execution plan using the coprocessor.
12. The apparatus of any combination of one or more of the statements above, wherein to translate the database query plan data, the processing device is further to: convert the one or more database tables into a plurality of tensors.
13. The apparatus of any combination of one or more of the statements above, wherein the processing device is further to: decode a plurality of fragments of the database query plan data into a plurality of tensors; and concatenate the plurality of fragments into an input group.
14. The apparatus of any combination of one or more of the statements above, wherein the one or more operators comprise a query operation to be performed on one or more of the plurality of tensors using the coprocessor and wherein the implementation of the one or more operators comprises the query operation implemented for the coprocessor and the type of data in the one or more of the plurality of tensors.
15. The apparatus of any combination of one or more of the statements above, wherein the one or more characteristics of the data comprises at least one of a type of the data, a range of the data, or statistics of the data.
16. The apparatus of any combination of one or more of the statements above, wherein the coprocessor comprises at least one of a graphics processing unit (GPU), artificial intelligence hardware accelerator, or a field programmable gate array (FPGA).
17. The apparatus of any combination of one or more of the statements above, wherein to execute the coprocessor query execution plan, the coprocessor is to: generate hash tables for a first set of tables associated with the query; store the hash tables of tables in a cache local to the coprocessor; and execute, by the coprocessor, the operators on a second table and the first set of hash tables.
18. The apparatus of any combination of one or more of the statements above, wherein to execute the operators on the second table and the first set of hash tables the coprocessor is to: execute the operators on a plurality of segments of the second table; and return, to the database host, a result from the operator on the plurality of segments of the second table.
19. The apparatus of any combination of one or more of the statements above, wherein to execute the coprocessor query execution plan, the coprocessor is to: generate hash tables for a first set of tables associated with the database query plan data; store the hash tables of tables in a cache local to the coprocessor; and execute, by the coprocessor, the one or more operators on a second table and the hash tables generated from the first set of tables.
20. The apparatus of any combination of one or more of the statements above, wherein to execute the one or more operators on the second table and the hash tables generated from the first set of tables, the coprocessor is to: execute the one or more operators on a plurality of segments of the second table; and return, to the database host, a result from the one or more operators executed on the plurality of segments of the second table.
21. A non-transitory computer readable storage medium database query acceleration using a coprocessor, the non-transitory computer readable storage medium storing instructions which, when executed, cause a processing device to: receive, by a query execution platform, database query plan data from a database host, the database query plan data comprising a query execution plan and one or more database tables; translate the database query plan data into format associated with a coprocessor of the query execution platform; generate a coprocessor query execution plan for the coprocessor based on the query execution plan of the database query plan data; identify one or more operators for executing the coprocessor query execution plan; select an implementation for each of the one or more operators based on one or more characteristics of data on which the one or more operators are to be applied based on the coprocessor execution plan; and execute the coprocessor query execution plan using the coprocessor.
22. The non-transitory computer readable storage medium of any combination of one or more of the statements above, wherein to translate the database query plan data, the processing device is further to: convert the one or more database tables into a plurality of tensors.
23. The non-transitory computer readable storage medium of any combination of one or more of the statements above, wherein the processing device is further to: decode a plurality of fragments of the database query plan data into a plurality of tensors; and concatenate the plurality of fragments into an input group.
24. The non-transitory computer readable storage medium of any combination of one or more of the statements above, wherein the one or more operators comprise a query operation to be performed on one or more of the plurality of tensors using the coprocessor and wherein the implementation of the one or more operators comprises the query operation implemented for the coprocessor and the type of data in the one or more of the plurality of tensors.

Methods, apparatuses, and products for database query acceleration are defined. Methods include receiving, by a query execution platform, database query plan data from a database host, the database query plan data comprising a query execution plan and one or more database tables, translating the database query plan data into format associated with a coprocessor of the query execution platform, generating a coprocessor query execution plan for the coprocessor based on the query execution plan of the database query plan data, identifying one or more operators for executing the coprocessor query execution plan, selecting an implementation for each of the one or more operators based on one or more characteristics of data on which the one or more operators are to be applied based on the coprocessor execution plan, and executing the coprocessor query execution plan using the coprocessor.

Although one or more embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that one or more embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of accelerating database queries, comprising:
receiving (702), by a query execution platform (125), database query plan data (114) from a database host, the database query plan data (114) comprising a query execution plan (304) and one or more database tables (302);
translating (704) the database query plan data (114) into a format associated with a coprocessor (135) of the query execution platform (125);
generating (706) a coprocessor query execution plan (314) for the coprocessor (135) based on the query execution plan (304) of the database query plan data (114);
identifying (708) one or more operators (320) for executing the coprocessor query execution plan (314);
selecting (710) an implementation for each of the one or more operators (320) based on one or more characteristics of data on which the one or more operators are to be applied based on the coprocessor query execution plan (314); and
executing (712) the coprocessor query execution plan (314) using the coprocessor (135).

2. The method of claim 1, wherein translating the database query plan data comprises converting the one or more database tables into a plurality of tensors.

3. The method of claim 1 or claim 2, further comprising:
decoding a plurality of fragments of the database query plan data into a plurality of tensors; and
concatenating the plurality of fragments into an input group.

4. The method of any previous claim, wherein the one or more operators comprise a query operation to be performed on one or more of a plurality of tensors using the coprocessor and wherein the implementation of the one or more operators comprises the query operation implemented for the coprocessor and a type of data in one or more of the plurality of tensors.

5. The method of any previous claim, wherein the one or more characteristics of the data comprises at least one of a type of the data, a range of the data, or statistics of the data.

6. The method of any previous claim, wherein the coprocessor comprises at least one of a graphics processing unit 'GPU', artificial intelligence hardware accelerator, or a field programmable gate array 'FPGA'.

7. The method of any previous claim, wherein executing the coprocessor query execution plan comprises:
generating hash tables for a first set of tables associated with the database query plan data;
storing the hash tables of tables in a cache local to the coprocessor; and
executing, by the coprocessor, the one or more operators on a second table and the hash tables generated for the first set of tables.

8. The method of claim 7, wherein executing the one or more operators on the second table and the hash tables generated for the first set of tables comprises:
executing the one or more operators on a plurality of segments of the second table; and
returning, to the database host, a result from the one or more operators executed on the plurality of segments of the second table.

9. An apparatus for database query acceleration using a coprocessor, comprising:
a memory; and
a processing device, operatively coupled to the memory, the processing device configured to:
receive (702), by a query execution platform (125), database query plan data (114) from a database host, the database query plan data (114) comprising a query execution plan (304) and one or more database tables (302);
translate (704) the database query plan data (114) into a format associated with a coprocessor (135) of the query execution platform (125);
generate (706) a coprocessor query execution plan (314) for the coprocessor (135) based on the query execution plan (304) of the database query plan data (114);
identify (708) one or more operators (320) for executing the coprocessor query execution plan (314);
select (710) an implementation for each of the one or more operators (320) based on one or more characteristics of data on which the one or more operators are to be applied based on the coprocessor query execution plan (314); and
execute (712) the coprocessor query execution plan (314) using the coprocessor (135).

10. The apparatus of claim 9, wherein to translate the database query plan data, the processing device is further to:
convert the one or more database tables into a plurality of tensors.

11. The apparatus of claim 9 or claim 10, wherein the processing device is further to:
decode a plurality of fragments of the database query plan data into a plurality of tensors; and
concatenate the plurality of fragments into an input group.

12. The apparatus of any of claims 9 to 11, wherein the one or more operators comprise a query operation to be performed on one or more of a plurality of tensors using the coprocessor and wherein the implementation of the one or more operators comprises the query operation implemented for the coprocessor and a type of data in the one or more of the plurality of tensors.

13. The apparatus of any of claims 9 to 12, wherein to execute the coprocessor query execution plan, the coprocessor is to:
generate hash tables for a first set of tables associated with the database query plan data;
store the hash tables of tables in a cache local to the coprocessor; and
execute, by the coprocessor, the one or more operators on a second table and the hash tables generated from the first set of tables.

14. The apparatus of claim 13, wherein to execute the one or more operators on the second table and the hash tables generated from the first set of tables, the coprocessor is to:
execute the one or more operators on a plurality of segments of the second table; and
return, to the database host, a result from the one or more operators executed on the plurality of segments of the second table.

15. A non-transitory computer readable storage medium for database query acceleration using a coprocessor, the non-transitory computer readable storage medium storing instructions which, when executed, cause a processing device to implement a method according to any of claims 1 to 8.
